# EUROPÄISCHE PATENTSCHRIFT

(11) **EP 2 659 092 B1**
(45) Veröffentlichungstag und Bekanntmachung des Hinweises auf die Patenterteilung: **24.09.2014**
(21) Anmeldenummer: 10801385.5
(22) Anmeldetag: 30.12.2010
(51) Int. Cl.: E21D 23/12, B65G 43/00, G01C 5/04, E21D 23/00

(54) **STREBAUSRÜSTUNG MIT EINER DARAN VERLEGTEN SCHLAUCHWAAGE ZUR BESTIMMUNG DER HÖHENLAGE VON EINZELNEN ELEMENTEN DER STREBAUSRÜSTUNG**
LONGWALL MINING EQUIPMENT WITH LEVELLING HOSE ATTACHED TO IT FOR DETERMINING HEIGHT OF INDIVIDUAL ELEMENTS OF THE LONGWALL MINING EQUIPMENT
EQUIPEMENT DE TRANSPORTEUR EN TAILLE MUNI D'UN DISPOSITIF DE MESURE DE NIVELLEMENT UTILISANT UN TUYAU AFIN DE DÉTERMINER LA HAUTEUR D'ÉLÉMENTS INDIVIDUELS DU TRANSPORTEUR DE TAILLE

(43) Veröffentlichungstag der Anmeldung: 06.11.2013
(73) Patentinhaber: Rag Aktiengesellschaft, 44623 Herne (DE)
(72) Erfinder: JUNKER, Martin, 45133 Essen (DE); MOZAR, Armin, 59073 Hamm (DE)
(74) Vertreter: Müller, Karl-Ernst
(86) Internationale Anmeldenummer: PCT/EP2010/007991
(87) Internationale Veröffentlichungsnummer: WO 2012/089230

(56) Entgegenhaltungen:
- WO-A1-01/81726
- WO-A1-2009/103303
- WO-A2-2010/150196
- DE-A1- 2 944 305
- DE-A1- 4 333 032

## Beschreibung

Die Erfindung betrifft eine Strebausrüstung für die maschinelle Gewinnung im Langfrontbau, insbesondere im untertägigen Steinkohlenbergbau, mit einem längs der Abbaufront angeordneten Strebförderer, einem längs des Strebförderers verfahrbaren Gewinnungsmittel und mit im Winkel zum Strebförderer daran angeschlagenen Schildausbaueinheiten.

Eine Strebausrüstung mit den vorgenannten Merkmalen ebenso wie ein Verfahren zum Steuern einer derartigen Strebausrüstung sind in der WO2009/103303 beschrieben. Hierzu ist in der vorgenannten Schrift im Einzelnen dargelegt, dass die Automatisierung einer derartigen Steuerung der Strebausrüstung allgemein von der Kenntnis der Stellung der Strebausrüstung beziehungsweise von deren Elementen im Raum, insbesondere aber von der Kenntnis der jeweils im Bereich des vorderen Endes der Hangendkappe bestehenden Höhe der Streböffnung abhängig ist. Die Ermittlung der betreffenden Basiswerte für die Berechnung beispielsweise der Streböffnungshöhe geschieht gemäß diesem Stand der Technik über an den Hauptbestandteilen der einzelnen Schildausbaueinheiten wie Bodenkufe, Bruchschild, Traglenkern und Hangendkappe angebrachte Neigungssensoren, mittels derer die Neigung der jeweiligen Bauteile gegen die Horizontale ermittelt wird. Durch Vergleich der aufgenommenen Daten mit in einer Auswerteeinheit abgelegten, die geometrische Ausrichtung der Bauteile und deren Bewegung während des Schreitens definierenden Basisdaten kann die jeweilige bankrechte Höhe der Schildausbaueinheit am vorderen Ende der Hangendkappe berechnet werden, die ein Maß für die Höhe der Streböffnung darstellt.

Mit der bekannten Vorgehensweise ist der Nachteil einer aufwändigen Rechenarbeit verbunden, die zudem eine zutreffende Erfassung der für die jeweilige Bauform der eingesetzten Schildausbaueinheit geltenden Basisdaten und die Erstellung eines anwendbaren Algorithmus für die Berechnung der bankrechten Höhe voraussetzt.

Abgesehen von der vorstehend genannten mittelbaren Bestimmung von Höhendaten ist eine unmittelbare Erfassung von Höhendaten mittels eines Schlauchwaagensystems beim Vortrieb von Tunneln aus der DE 43 33 032 C2 bekannt. Hierbei ist zwischen der Tunnelvortriebsmaschine und einem Referenzpunkt ein Schlauchwaagesystem angeordnet, dessen verschlossener, flüssigkeitsgefüllter Schlauch mit einem Ende der Referenzhöhe und mit dem anderen Ende zur Bestimmung weiterer Größen der Messhöhe der Tunnelvortriebsmaschine zugeordnet ist.

Der Erfindung liegt die Aufgabe zugrunde, die Ermittlung von Höhendaten bei einer gattungsgemäßen Strebausrüstung zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Ermittlung der absoluten Höhenlage von vorgegebenen Elementen der Strebausrüstung eine flüssigkeitsgefüllte Schlauchwaage längs der Abbaufront an den ausgewählten Elementen der Strebausrüstung verlegt ist, die an eine in ihrer Höhe als Referenzpunkt exakt bestimmte, in einer der Abbaubegleitstrecken angeordnete Basisstation angeschlossen ist, wobei über den Verlauf der Strebausrüstung verteilt an einzelnen Elementen der Strebausrüstung in die Schlauchleitung der Schlauchwaage Drucksensoren eingeschaltet und mit einer zentralen Auswerte- und Steuereinheit verbunden sind. Mit der Erfindung ist der Vorteil verbunden, dass mittels der an einer Strebausrüstung längs der Abbaufront verlegten Schlauchwaage unmittelbare Höhendaten erfasst und über die in entsprechend ausgewählten Abständen angeordneten Drucksensoren auch direkt einzelnen Stellen des Verlaufes der Abbaufront zuordnet werden können. Aus dem jeweils zu ermittelnden Druckunterschied zwischen dem an der Basisstation bestimmten Referenzdruck und dem vom jeweiligen lokalen Drucksensor im Streb aufgenommenen absoluten Druck kann die Druckdifferenz ermittelt und zur Bestimmung einer entsprechenden Höhendate genutzt werden. Über die Ableitung von mehreren über den Strebverlauf ermittelten Höhendaten kann ein Höhenprofil für die Elemente der Strebausrüstung ermittelt werden, denen die jeweilige Schlauchwaage zugeordnet ist.

Soweit nach Ausführungsbeispielen der Erfindung einzelne Schlauchwaagen oder ein Schlauchwaagensystem an den Hangendkappen und/oder den Bodenkufen der eingesetzten Schildausbaueinheiten und/oder am Strebförderer verlegt sowie auch an die Gewinnungsmaschine angeschlossen sein können, lassen sich die absoluten Höhenlagen der vorgenannten Elemente der Strebausrüstung unmittelbar feststellen, so dass damit eine wichtige Grundvoraussetzung für die automatisierte Steuerung von Strebbetrieben geschaffen ist. Soweit die im Stand der Technik bereits bekannten Neigungssensoren als Absolutwinkelmesser und eine Abbaufortschrittsmessung von Schildausbaueinheiten, Strebförderer und Gewinnungsmaschine auf der Basis einer gebräuchlichen Schreitzylinderwegmessung beibehalten werden, ist es auf der Basis dieser Erfassungssysteme möglich, kontinuierlich die Absolutkoordinaten und die Absolutlage der einzelnen Elemente der Strebausrüstung im Raum zu erfassen. Zusammen mit den bekannten Konstruktionsmaßen der einzelnen Elemente ist es somit möglich, beispielsweise Kollisionsprobleme zwischen den Hangendkappen der Schildausbaueinheiten und der längs der Abbaufront verfahrenden Gewinnungsmaschine zu beurteilen beziehungsweise entsprechende Kollisionen zu vermeiden.

Im Einzelnen ist nach einem Ausführungsbeispiel der Erfindung vorgesehen, dass die Schlauchleitung der Schlauchwaage an den Hangendkappen der Schildausbaueinheiten verlegt und einzelnen Schildausbaueinheiten jeweils ein Drucksensor zugeordnet ist. Die Schlauchleitung einer zugeordneten Schlauchwaage kann dabei im vorderen Bereich oder im mittleren Bereich der Hangendkappen der Schildausbaueinheiten verlegt sein.

Nach einem Ausführungsbeispiel der Erfindung kann weiterhin vorgesehen sein, dass die Schlauchleitung der Schlauchwaage an den Kufen der Schildausbaueinheiten verlegt und einzelnen Schildausbaueinheiten jeweils ein Drucksensor zugeordnet ist; gleichfalls kann vorgesehen sein, dass die Schlauchleitung der Schlauchwaage an den Rinnen des Strebförderers verlegt und einzelnen, von einander beabstandeten Rinnenschüssen jeweils ein Drucksensor zugeordnet ist, ferner dass die längs der Ablauffront verfahrbare Gewinnungsmaschine an eine an die Basisstation angeschlossene Schlauchleitung der Schlauchwaage angeschlossen und an der Gewinnungsmaschine wenigstens ein Drucksensor angeordnet ist.

Insbesondere soweit jeweils an allen Elementen der Strebausrüstung, nämlich Hangendkappen, Kufen, Strebförderer und Gewinnungsmaschine entsprechende Schlauchwaagen verlegt sind, ist es möglich, für die Stellung der Schildausbaueinheiten und die Lage des Strebförderers mit daran geführter Gewinnungsmaschine jeweils ein Höhenprofil zu erstellen, so dass daraus Rückschlüsse auf das Verhalten der Strebausrüstung während des Gewinnungsbetriebs gezogen werden können.

Soweit insbesondere bei an mehreren Elementen der Strebausrüstung verlegten Schlauchwaagen entsprechende Schlauchwaagensysteme gebildet sind, kann nach einem Ausführungsbeispiel der Erfindung vorgesehen sein, dass mehrere einzelne Schlauchwaagen mit zugeordneten Schlauchleitungen und darin angeordneten Drucksensoren getrennt an den Elementen der Strebausrüstung angeordnet sind.

In einer alternativen Ausführungsform der Erfindung kann vorgesehen sein, dass von der Basisstation eine zentrale Zuleitung bis zum Streb-Streckenübergang geführt ist, von der wenigstens zwei an unterschiedlichen Bestandteilen der Strebausrüstung verlegte Schlauchleitungen abgehen, die im Bereich der gegenüberliegenden Abbaubegleitstrecke miteinander verbunden sind und dass die in die unterschiedlichen Schlauchleitungen eingeschalteten Drucksensoren jeweils den gleichen Abstand vom Streb-Streckenübergang aufweisen.

Hinsichtlich der Ausbildung der Schlauchwaage beziehungsweise des Schlauchwaagensystems ist nach einem Ausführungsbeispiel der Erfindung vorgesehen, dass in der zu der die Basisstation aufnehmenden Abbaubegleitstrecke gegenüberliegenden Abbaubegleitstrecke ein Schlauchleitungsabschnitt der Schlauchwaage verlegt ist.

Dabei kann in einer ersten Ausführungsform der Erfindung vorgesehen sein, dass am Ende des Schlauchleitungsabschnitts ein Druckbegrenzungsventil angeordnet und insoweit die Schlauchleitung geschlossen ist, so dass sich unter Einbeziehung der Basisstation eine beidseitig geschlossene druckbefüllte Schlauchwaage ergibt. Das Druckbegrenzungsventil kann auch bei der Schlauchbefüllung von der Basisstation aus als Ablass für Luft und Wasser zur Entlüftung und Befüllung der Schlauchwaage dienen. Der Vorteil der beidseitig geschlossenen Schlauchwaage besteht im Wesentlichen darin, dass die Messungen unabhängig vom Höhenverlauf des Systems ohne Veränderung des Messaufbaus erfolgen können, da beispielsweise die Basisstation tiefer liegen kann als der endseitige Schlauchleitungsabschnitt, ohne dass der Messbetrieb gestört wird. Weitere Vorteile der geschlossenen Schlauchwaage bestehen darin, dass eine barometrische Korrektur nicht erforderlich ist, und dass wegen des erhöhten Druckniveaus im Schlauchleitungssystem ausgasungsbedingte Dichteveränderungen der Flüssigkeit (beispielsweise gelöste Luft) eine geringere und damit vernachlässigbare Rolle spielen. Ein Nachteil der geschlossenen Schlauchwaage besteht beispielsweise darin, dass die im System enthaltene Flüssigkeit vollständig gekammert ist. Damit kann sich aufgrund von Verdrückungen oder Temperaturveränderungen des Schlauches wie auch der Flüssigkeit das Druckniveau ändern. Die Höhenbestimmung muss daher auf Veränderungen des Basisdruckes am Referenzpunkt an der tiefsten Stelle der Schlauchwaage bezogen beziehungsweise berechnet werden. Dabei wird der Bezugsdruck insgesamt auf einem höheren Druckniveau gemessen, was bei Drucksensoren mit gleicher prozentualer Genauigkeit tendenziell verminderte Grundgenauigkeiten ergibt. Außerdem ist eine höhere Empfindlichkeit gegen dynamische Einflüsse wie mechanische Schwingungen festzustellen, weil durch die Kammerung der Flüssigkeit die Dämpfung des Systems vermindert ist.

Gemäß einem alternativen Ausführungsbeispiel der Erfindung ist daher vorgesehen, dass am Ende des in der zugeordneten Abbaubegleitstrecke verlegten Schlauchleitungsabschnitts zur Ausbildung einer einseitig offenen Schlauchwaage ein den höchsten Punkt der Schlauchwaage bildendes Überlaufbecken angeordnet ist, so dass sich eine einseitig offene Schlauchwaage ergibt. Die Vorteile einer derartigen einseitig offenen Schlauchwaage bestehen darin, dass eine einfache hydrostatische Druck-/Höhenbestimmung gegeben ist, wobei die ermittelten Absolutdrücke immer auf den an der Basisstation gemessen Druck bezogen werden können. Eine Beeinflussung der Messung durch Schlauchverdrückungen oder temperaturinduzierte Innendruckveränderungen ist ausgeschlossen, und es ist auch nur eine geringe Empfindlichkeit gegen dynamische Einflüsse in Form von mechanischen Schwingungen gegeben. Nachteilig ist, dass für Präzisionsmessungen eine barometrische Korrektur erforderlich ist. Außerdem können sich Anordnungsprobleme ergeben, da die offene Seite der Schlauchwaage mit dem Überlaufbecken immer an der höchsten Stelle liegen muss. Bei in untertägigen Abbaubetrieben nicht auszuschließenden wechselnden Verhältnissen kann dies Umbaumaßnahmen erfordern. Insbesondere bei wechselnden Gesamthöhen ist ein Überlauf der Schlauchwaage beziehungsweise eine Nachbefüllung sicherzustellen, um ein ordnungsgemäßes Arbeiten der Schlauchwaage zu erreichen.

Insofern ist nach einem Ausführungsbeispiel der Erfindung vorgesehen, dass die Basisstation in der jeweils tiefer liegenden Abbaubegleitstrecke angeordnet ist.

Es ist weiterhin zweckmäßig, wenn der dem Überlaufbecken nächstgelegene Drucksensor der Schlauchwaage in einer definierten Höhe unter dem Überlaufbecken angeordnet ist.

Dementsprechend kann vorgesehen sein, dass an der Basisstation ein Anschluss zur Befüllung der Schlauchwaage mit Flüssigkeit angeordnet ist.

Im Hinblick auf eine barometrische Korrektur der von den Drucksensoren ermittelten Messwerte kann vorgesehen sein, dass parallel zu der Schlauchleitung der Schlauchwaage eine Luftleitung verlegt ist, an die die in der Schlauchleitung der Schlauchwaage angeordneten Drucksensoren angeschlossen sind.

In der Zeichnung sind Ausführungsbeispiele der Erfindung wiedergegeben, welche nachstehend beschrieben sind. Es zeigen:
- Fig. 1: einen Streb mit eingebauter Strebausrüstung und einer an dem Strebförderer verlegten einseitig offenen Schlauchwaage in einer schematischen Darstellung,
- Fig. 2: ein Schlauchwaagensystem von einseitig offenen Schlauchwaagen zum Einsatz bei einer Strebausrüstung gemäß Figur 1 in einer schematischen Darstellung,
- Fig. 3: den Streb gemäß Figur 1 mit einer beidseitig geschlossenen Schlauchwaage,
- Fig. 4: ein Schlauchwaagensystem mit beidseitig geschlossenen Schlauchwaagen entsprechend Figur 2 im Einsatz bei einer Strebausrüstung gemäß Figur 3,
- Fig. 5: eine bezogen auf eine Schildausbaueinheit in Seitenansicht dargestellte Strebausrüstung mit daran verlegten Schlauchwaagen.

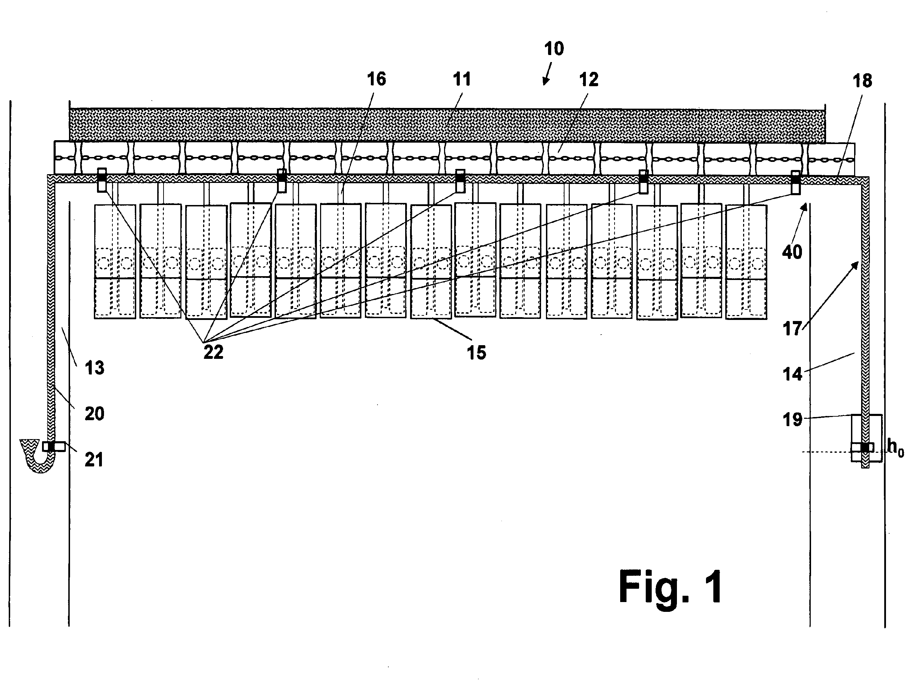

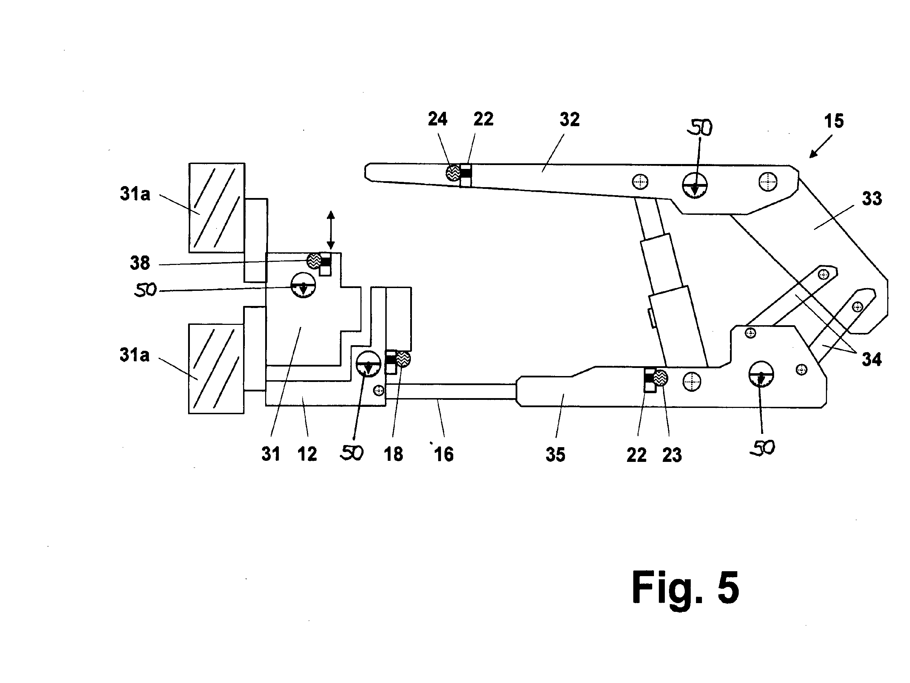

Soweit in Figur 1 schematisch eine Abbausituation im untertägigen Steinkohlenbergbau dargestellt ist, verläuft die Abbaufront 10 an einem Flöz 11 zwischen zwei Abbaubegleitstrecken, von denen die in Figur 1 linke Abbaubegleitstrecke als Kopfstrecke 13 und die entsprechend rechte Abbaubegleitstrecke als Bandstrecke 14 bezeichnet sind. Zwischen Kopfstrecke 13 und Bandstrecke 14 ist längs der Abbaufront 10 ein Strebförderer 12 verlegt, an dem eine hier nicht dargestellte Gewinnungsmaschine (vgl. Figur 5) geführt ist. Als Gewinnungsmaschinen kommen ein auf dem Strebförderer 12 fahrender Schrämwalzenlader oder auch ein an dem Strebförderer 12 geführter Hobel in Betracht. Dem Flöz 11 gegenüberliegend sind an dem Strebförderer 12 über Rückzylinder 16 Schildausbaueinheiten 15 angeschlagen, deren Aufbau sich ebenfalls aus Figur 5 näher ergibt. Eine entsprechende Abbausituation einschließlich der Elemente der Strebausrüstung ist durchgängig bekannt und einem Durchschnittsfachmann geläufig.

Zur Ermittlung eines Höhenprofils des Verlaufes der Abbaufront wie der Stellung der Elemente der Strebausrüstung im Raum auf der Basis von absoluten Höhendaten ist bei dem in Figur 1 dargestellten Ausführungsbeispiel eine elektronische Schlauchwaage 17 mit einer an dem Strebförderer 12 verlegten Schlauchleitung 18 angeordnet. Die Schlauchleitung 18 ist am Streb-Streckenübergang 40 aus dem Streb heraus in die Bandstrecke 14 geführt, und an eine in der Bandstrecke 14 aufgestellte Basisstation 19 angeschlossen. Auf der gegenüberliegenden Seite geht die an dem Strebförderer 12 verlegte Schlauchleitung 18 in einen in der Kopfstrecke 13 verlegten Schlauchleitungsabschnitt 20 über. In die Schlauchleitung 18 sind im Abstand zueinander und damit einzelnen Schildausbaueinheiten 15 zugeordnet Drucksensoren 22 eingeschaltet, wobei zusätzlich am Ende des in der Kopfstrecke 13 verlegten Schlauchleitungsabschnitts 20 ein End-Drucksensor 21 angeordnet ist.

Soweit es sich bei dem in Figur 1 dargestellten Ausführungsbeispiel um eine einseitig offene elektronische Schlauchwaage handelt, ist die Basisstation 19 an der tiefsten Stelle der Schlauchwaage 17 anzuordnen. Soweit normalerweise in untertätigen Abbaubetrieben ein schwebender Verhieb mit einem Einfallen der Abbaufront 10 von der Kopfstrecke 13 zur Bandstrecke 14 angestrebt wird, ist bei dem dargestellten Ausführungsbeispiel die Basisstation 19 entsprechend in der Bandstrecke 14 angeordnet, und zwar mit einem solchen Abstand zur Abbaufront 10, dass keine starken Konvergenzeinwirkungen im Streckenbereich mehr zu erwarten sind. An der Basisstation 19 ist die jeweilige betriebliche Ausgangshöhe h₀ mit entsprechender Genauigkeit einzumessen, wobei zur Gewährleistung der Genauigkeit der laufenden Messungen regelmäßige Kontrolleinmessungen der Ausgangshöhe h₀ an der Basisstation 19 vorzunehmen sind.

Wie dargestellt kann jeder n-ten Schildausbaueinheit 15 ein Drucksensor 22 zur Messung des in der Schlauchleitung 18 an der betreffenden Stelle herrschenden Absolutdrucks installiert sein, der seine Daten über an den Schildausbaueinheiten 15 eingerichtete Schildsteuerungen oder ein anderes Datenübertragungssystem zu einer zentralen Auswerte- und Steuereinheit sendet. Aus dem Druckunterschied zwischen dem an der Basisstation 19 eingemessenen Referenzdruck und dem vom jeweiligen lokalen Drucksensor in der Abbaufront 10 gemessenen Druck kann die Differenzhöhe und die Absoluthöhe des lokalen Drucksensors 22 ermittelt werden. Diese Werte können für jeden Drucksensor 22 und im Rahmen der Abbaufortschrittsmessung für jede neue Sensorkoordinate in der Auswerte- und Steuereinheit aufgezeichnet und zur Ableitung eines über die Abbaufront 10 zu legenden Höhenprofils genutzt werden.

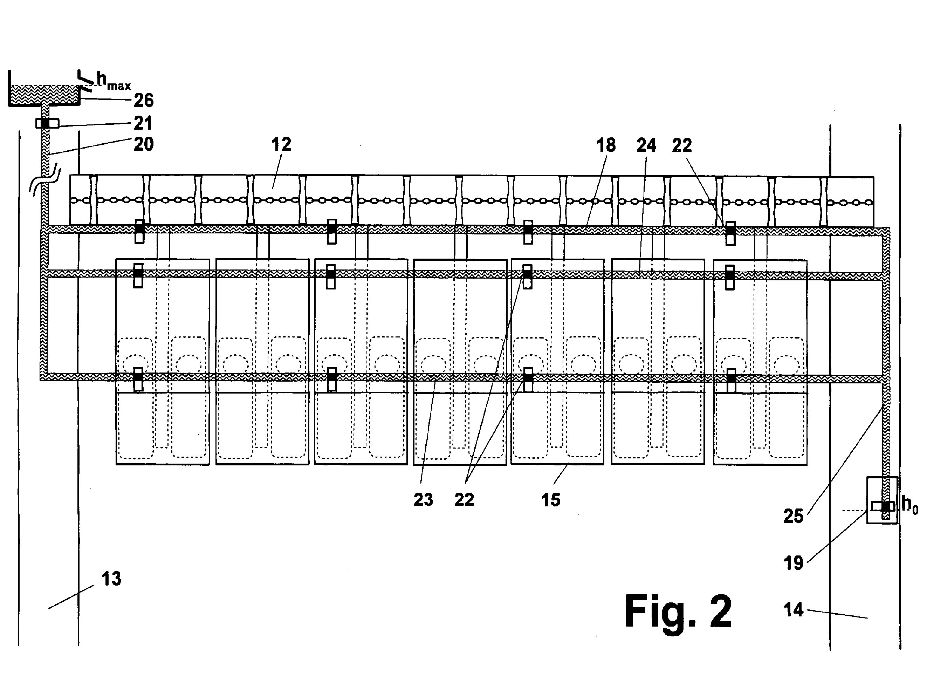

Da bei entsprechender Verlegung von mehreren elektronischen Schlauchwaagen 17 an den einzelnen Elementen der Strebausrüstung auch die Höhenlage an den Elementen der Strebausrüstung ermittelt werden kann, ist es über die unmittelbare Höheneinmessung möglich, auch Abstände zwischen den einzelnen Elementen der Strebausrüstung festzustellen. Hierzu kann ein Schlauchwaagensystem von elektronischen Schlauchwaagen 17 ausgebildet werden, wie dies in schematischer Weise in Figur 2 wiederum mit einseitig offenen elektronischen Schlauchwaagen dargestellt ist. Zusätzlich zu der an dem Strebförderer 12 verlegten Schlauchleitung 18 entsprechend Figur 1 ist gemäß Figur 2 eine weitere Schlauchleitung 23 an den Kufen der Schildausbaueinheiten 15 verlegt sowie eine weitere Schlauchleitung 24 an den Hangendkappen der Schildausbaueinheiten 15. Alle drei Schlauchleitungen 18, 23, 24 sind an eine gemeinsame Zuleitung 25 angeschlossen, die die Schlauchleitungen 18, 23, 24 mit der in der Bandstrecke 14 aufgestellten Basisstation 19 verbindet. In gleicher Weise sind im Bereich der Kopfstrecke 13 die Schlauchleitungen 18, 23, 24 an den in der Kopfstrecke 13 verlegten Schlauchleitungsabschnitt 20 angeschlossen, der entsprechend der Ausbildung der in Figuren 1 und 2 dargestellten einseitig offenen Schlauchwaagen zu einem in der Kopfstrecke 13 aufgestellten Überlaufbecken 26 geführt ist.

Soweit die Funktion der Schlauchwaagentechnik eine durchgängige Wassersäule in der Schlauchleitung der Schlauchwaage ohne Lufteinschlüsse voraussetzt, ist eine Flüssigkeitseinspeisung zu konzipieren, die genau dies gewährleistet. Daher sollte die Befüllung der Schlauchwaagenleitung von der tiefsten Stelle aus erfolgen, also in dem im Ausführungsbeispiel dargestellten Fall von der Basisstation 19 aus. Am höchsten Punkt der Schlauchwaage, bei den dargestellten Ausführungsbeispielen im Bereich des Überlaufbeckens 26, sollte ein Überlaufsiffon mit offenem Austrag positioniert werden. Zur Überwachung der vollständigen Befüllung sowie von Befüllvorgängen sollte der endseitige letzte Drucksensor 21 der von den Drucksensoren 22 sowie 21 ausgebildeten Messkette in einer definierten Höhe unter dem Überlaufsiffon (Überlaufbecken 26) integriert werden. Wenn also im Bereich des Überlaufbeckens 26 die korrekte Höhe (als Drucksignal) angezeigt wird, so ist das Schlauchwaagensystem vollständig befüllt. Wenn eine vollständige Befüllung nicht gegeben sein sollte, so kann beispielsweise bei Anordnung eines Elektromagnetventils im Bereich der Basisstation 19 die automatische Befüllung ausgelöst werden, bis im Bereich des Überlaufbeckens 26 die gewünschte Flüssigkeitssäule ansteht. Weiterhin kann der Einsatz von sogenannten Schlauchmolchen in Betracht gezogen werden, mittels derer ebenfalls Luftblasen sicher aus einem Schlauchsystem entfernt werden können.

Der Vorteil des Einsatzes der zuvor beschriebenen einseitig offenen Schlauchwaage besteht zunächst darin, dass eine einfache hydrostatische Druck- bzw. Höhenbestimmung ist, wobei die von den Drucksensoren 22 gemessen Absolutdrücke immer auf den an der Basisstation 19 herrschenden Druck bezogen werden können. Es findet keine Beeinflussung der Messung durch Schlauchverdrückungen oder durch temperaturinduzierte Innendruckveränderungen statt, und schließlich ist eine geringe Empfindlichkeit gegen dynamische Einflüsse, beispielsweise in Form von mechanischen Schwingungen, gegeben. Wie dargestellt ist auch eine automatische und kontrollierte Befüllung der einseitig offenen Schlauchwaage möglich. Die Nachteile bestehen darin, dass für Präzisionsmessungen eine barometrische Korrektur erforderlich ist. Im bergmännischen Betrieb können sich Anordnungsprobleme der einseitig offenen Schlauchwaage ergeben, da das offene Ende der Schlauchwaage 17 immer an der höchsten Stelle liegen muss; dies kann bei wechselnder Flözlagerung beziehungsweise wechselnden Abbauverhältnissen entsprechende Umbaumaßnahmen erfordern. Bei wechselnden Gesamthöhen ist daher der Überlauf beziehungsweise die Nachbefüllung der Schlauchwaage sicherzustellen.

Generell sollten bei dem erfindungsgemäßen Einsatz von elektronischen Schlauchwaagen Präzisionsdrucksensoren eingesetzt werden, mit einer Absolutgenauigkeit von mindestens 0,01 bar und einem langzeitstabilen Laufverhalten. Die Einhaltung eines exakten Nullpunktes sowie einer sehr guten Linearität sind erforderlich. Da dies nur mittels einer internen Temperaturkompensation zu gewährleisten ist, sollte die Temperatur der in der Schlauchleitung der Schlauchwaage anstehenden Flüssigkeit ebenfalls erfasst und an die Auswerte- und Steuereinheit übermittelt werden, so dass temperaturbedingte Dichteveränderungen der Flüssigkeitssäule abschnittsweise kompensiert werden können. Auch ist eine physikalische (hydraulische) und elektronische Bedämpfung der Messdaten sinnvoll, um die Messdaten trotz der im Gewinnungsbetrieb bei laufendem Strebförderer beziehungsweise vorbeifahrender Gewinnungsmaschine auftretenden Schwingungen zu beruhigen.

Zur Sicherstellung der gewünschten Genauigkeit sollten die an einer elektronischen Schlauchwaage eingesetzten Drucksensoren 22 beziehungsweise 21 über den Einsatz eines hochpräzisen Referenzsensors kalibrierbar sein, wobei der Referenzsensor in gleicher Höhe zu dem jeweiligen Drucksensor anzuschließen ist. Zur Kalibrierung müssen beide Sensoren durch geeignete Schieber vorübergehend drucklos geschaltet werden. Anschließend muss der zu prüfende Drucksensor durch elektronisches Setzen des Nullpunktes exakt auf den Nullpunkt kalibriert werden. Danach wird die Schlauchwaage wieder auf den hydraulischen Durchgang geschiebert, und der zu prüfende Drucksensor muss nun vom Referenzsensor den aktuellen Absolutdruck lernen. Mit einer derartigen Zweipunktkalibrierung erhalten alle im Rahmen der Schlauchwaage 17 eingesetzten Drucksensoren 22 beziehungsweise 21 eine übereinstimmte Anzeigecharakteristik. Hierdurch kann sichergestellt werden, dass auch bei kleinen Höhenunterschieden durch den Vergleich der Absolutdrücke die Höhenlagen der Elemente der Strebausrüstung exakt bestimmt werden können.

Zur Kompensation von durch die Bewetterung der Grubenbaue hervorgerufene Luftdruckeinflüssen kann mit den Schlauchleitungen 18, 23, 24 der Schlauchwaagen 17 ein zweiter kleiner Luftschlauch verlegt werden, an den alle Drucksensoren 22 beziehungsweise 21 angeschlossen sind. Hierdurch ist die Messung eines Differenzdruckes der Flüssigkeitssäule gegen den den Bewetterungsbedingungen entsprechenden lokalen Luftdruck möglich, so dass der jeweilige Luftdruckeinfluss physikalisch kompensiert werden kann.

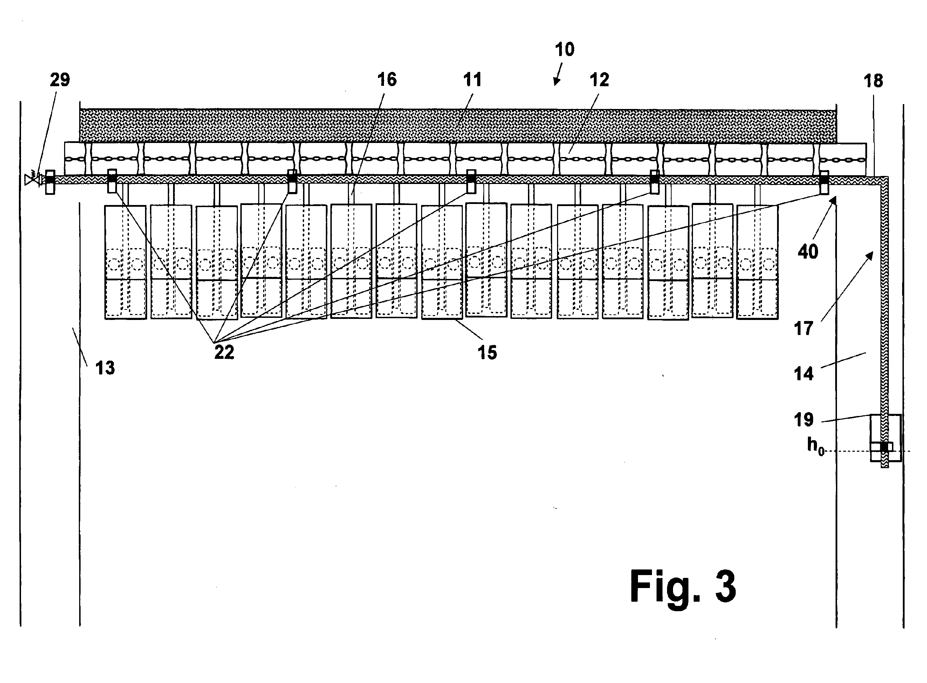

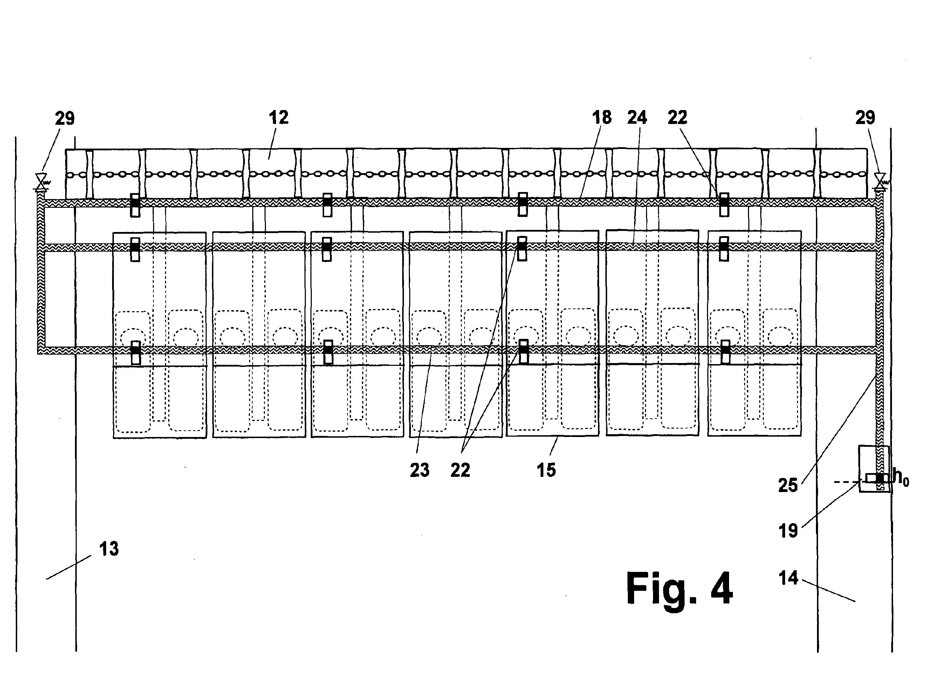

Das entsprechend dem zu Figuren 1 und 2 in den Figuren 3 und 4 dargestellte Ausführungsbeispiel unterscheidet sich von den zuvor beschriebenen Ausführungsbeispielen dadurch, dass eine beidseitig geschlossene Schlauchwaage 17 eingesetzt ist, die an ihrem in der Kopfstrecke 13 liegenden Ende mittels eines mit einem offenen Austrag ausgerüsteten Druckbegrenzungsventils 29 verschlossen ist. Dieses Druckbegrenzungsventil 29 dient bei der Befüllung der Schlauchleitung 18 von der in der Bandstrecke 14 angeordneten Basisstation 19 aus als Ablass für Luft und Flüssigkeit zur Entlüftung und Befüllung. Sollte das Druckniveau in dem geschlossen Schlauchsystem unter einen Grenzwert fallen, kann eine automatische Nachbefüllung erfolgen. Der Vorteil des Einsatzes einer beidseitig geschlossenen elektronischen Schlauchwaage besteht darin, dass die Messungen unabhängig vom Höhenverlauf ohne Veränderung des Messaufbaus erfolgen können. So kann zum Beispiel das in der Kopfstrecke 13 liegende Ende der Schlauchleitung 18 nunmehr tiefer liegen als die in der Bandstrecke 14 liegende Basisstation 19, ohne dass der Messbetrieb gestört ist. Aus dem Druckunterschied zwischen dem vom jeweiligen lokalen Drucksensor 22 ermittelten Druck und dem an der Basisstation 19 gemessenen Druck können die Differenzhöhe und die Absoluthöhe jedes Drucksensors 22 an der Abbaufront 10 ermittelt werden, wie dies für die einseitig offene Schlauchwaage beschrieben ist.

Der Nachteil eines Schlauchwaagensystems mit beidseitig geschlossenen Schlauchwaagen 17 besteht darin, dass sich das Druckniveau innerhalb der Schlauchwaagen 17 durch Verdrückungen oder Temperaturveränderungen des Schlauchmaterials wie der Flüssigkeit das Druckniveau verändern kann. Auch ist eine höhere Empfindlichkeit gegen dynamische Einflüsse in Form von mechanischen Schwingungen gegeben, da durch die Kammerung der Flüssigkeit die Dämpfung vermindert ist.

Wie sich aus Figur 4 ergibt, ist der Einsatz mehrer Messlinien im Rahmen eines Schlauchwaagensystems mit einer an dem Strebförderer 12 verlegten Schlauchleitung 18 sowie mit einer an den Kufen der Schildausbaueinheiten 15 verlegten Schlauchleitung 23 und mit einer an den Hangendkappen der Schildausbaueinheiten 15 verlegten Schlauchleitung 24 möglich.

Die Realisierung eines derartigen Schlauchwaagensystems im Rahmen einer Strebausrüstung ist nochmals aus Figur 5 ersichtlich. Die in den Figuren 1 bis 4 nur schematisch dargestellten Schildausbaueinheiten 15 bestehen im Einzelnen aus einer Hangendkappe 32, einem Bruchschild 33, Traglenkern 34 und einer Kufe 35, wobei jede Schildausbaueinheit 15 mittels des Rückzylinders 16 mit dem Strebförderer 12 verbunden ist. Bei dem dargestellten Ausführungsbeispiel besteht die Gewinnungsmaschine aus einem Walzenschrämlader 31 mit Schneidwalzen 31 a. Ein derartiger Aufbau der Strebausrüstung ist im Stand der Technik bekannt.

Aus Figur 5 ist zu ersehen, dass an Strebförderer 12, Kufen 35 sowie Hangendkappen 32 der Schildausbaueinheiten 15 Schlauchleitungen 18 bzw. 23 bzw. 24 verlegt sind, wobei bei dem dargestellten Ausführungsbeispiel die Schlauchleitung 24 am vorderen Ende der Hangendkappen 32 verlegt ist. Zusätzlich ist auch der Walzenschrämlader 31 über eine an ihm angeschlossene Schlauchleitung mit einem auf dem Walzenschrämlader 31 angeordneten Drucksensor 38 an die Basisstation 19 angeschlossen, so dass die Ermittlung der Höhenlage des Schrämwalzenladers 31 ebenfalls möglich ist. Mit einer derartigen Anordnung ist es somit möglich, aus dem Vergleich der Höhe der Hangendkappen 32 zur Lage der Kufen 35 beziehungsweise des Strebförderers 12 Rückschlüsse auf die Höhe der Streböffnung im Bereich der vorderen Enden der Hangendkappen 32 zu ziehen, und aus der Kenntnis der Höhenlage des Schrämwalzenladers 31 im Verhältnis zum vorderen Ende der Hangendkappe 32 lassen sich wiederum Rückschlüsse über eventuelle Kollisionen zwischen Schrämwalzenlader 31 und Schildausbaueinheiten 15 ziehen.

Wie sich aus Figur 5 ferner ergibt, sind in einer aus dem Stand der Technik bekannten Weise an den Bestandteilen der Schildausbaueinheiten 15, nämlich an Hangendkappe 32 und Kufe 35 wie auch am Strebförderer 12 und an der Gewinnungsmaschine 31 jeweils Neigungssensoren 50 angeordnet, die ebenfalls zur Bestimmung von Höhendaten herangezogen werden können.

Insgesamt können die gemessenen Höhendaten in vielfältiger Weise für die automatisierte Steuerung von Strebbetrieben genutzt werden.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Strebausrüstung für die maschinelle Gewinnung im Langfrontbau, insbesondere im untertägigen Steinkohlenbergbau, mit einem längs der Abbaufront (10) angeordneten Strebförderer (12), einem längs des Strebförderers (12) verfahrbaren Gewinnungsmittel und mit im Winkel zum Strebförderer (12) daran angeschlagenen Schildausbaueinheiten (15), **dadurch gekennzeichnet, dass** zur Ermittlung der absoluten Höhenlage von vorgegebenen Elementen der Strebausrüstung eine flüssigkeitsgefüllte Schlauchwaage (17) längs der Abbaufront (10) an den ausgewählten Elementen (12, 15, 31) der Strebausrüstung verlegt ist, die an eine in ihrer Höhe als Referenzpunkt exakt bestimmte, in einer der Abbaubegleitstrecken (13, 14) angeordnete Basisstation (19) angeschlossen ist, wobei über den Verlauf der Strebausrüstung verteilt an einzelnen Elementen (12, 15, 31) der Strebausrüstung in die Schlauchleitung (18, 23, 24) der Schlauchwaage (17) Drucksensoren (22) eingeschaltet und mit einer zentralen Auswerte- und Steuereinheit verbunden sind.

2. Strebausrüstung nach Anspruch 1, **dadurch gekennzeichnet, dass** die Schlauchleitung (24) der Schlauchwaage (17) an den Hangendkappen (32) der Schildausbaueinheiten (15) verlegt und einzelnen Schildausbaueinheiten (15) jeweils ein Drucksensor (22) zugeordnet ist.

3. Strebausrüstung nach Anspruch 1, **dadurch gekennzeichnet, dass** die Schlauchleitung (23) der Schlauchwaage (17) an den Kufen (35) der Schildausbaueinheiten (15) verlegt und einzelnen Schildausbaueinheiten (15) jeweils ein Drucksensor (22) zugeordnet ist.

4. Strebausrüstung nach Anspruch 1, **dadurch gekennzeichnet, dass** die Schlauchleitung (18) der Schlauchwaage (17) an den Rinnen des Strebförderers (12) verlegt und einzelnen, von einander beabstandeten Rinnenschüssen jeweils ein Drucksensor (22) zugeordnet ist.

5. Strebausrüstung nach Anspruch 1, **dadurch gekennzeichnet, dass** die längs der Ablauffront (10) verfahrbare Gewinnungsmaschine (31) an eine an die Basisstation (19) angeschlossene Schlauchleitung der Schlauchwaage angeschlossen und an der Gewinnungsmaschine (31) wenigstens ein Drucksensor (38) angeordnet ist.

6. Strebausrüstung nach einem der Ansprüche 1 bis 5, **dadurch gekennzeichnet, dass** mehrere einzelne Schlauchwaagen (17) mit zugeordneten Schlauchleitungen (18, 23, 24) und darin angeordneten Drucksensoren (22) an den Elementen (12, 15, 31) der Strebausrüstung angeordnet sind.

7. Strebausrüstung nach einem der Ansprüche 1 bis 5, **dadurch gekennzeichnet, dass** von der Basisstation (19) eine Zuleitung (25) bis zum Streb-Streckenübergang (40) geführt ist, von der wenigstens zwei an unterschiedlichen Bestandteilen (12, 15, 31) der Strebausrüstung verlegte Schlauchleitungen (18, 23, 24) abgehen, die im Bereich der gegenüberliegenden Abbaubegleitstrecke miteinander verbunden sind und dass die in die unterschiedlichen Schlauchleitungen (18, 23, 24) eingeschalteten Drucksensoren (22) jeweils den gleichen Abstand vom Streb-Streckenübergang (40) aufweisen.

8. Strebausrüstung nach einem der Ansprüche 1 bis 7, **dadurch gekennzeichnet, dass** in der zu der die Basisstation (19) aufnehmenden Abbaubegleitstrecke (14) gegenüberliegenden Abbaubegleitstrecke (13) ein Schlauchleitungsabschnitt (20) der Schlauchwaage (17) verlegt ist.

9. Strebausrüstung nach Anspruch 8, **dadurch gekennzeichnet, dass** am Ende des Schlauchleitungsabschnitts (20) zur Ausbildung einer beidseitig geschlossenen druckbefüllten Schlauchwaage ein Druckbegrenzungsventil (29) angeordnet ist.

10. Strebausrüstung nach Anspruch 8, **dadurch gekennzeichnet, dass** am Ende des Schlauchleitungsabschnitts (20) zur Ausbildung einer einseitig offenen Schlauchwaage ein den höchsten Punkt der Schlauchwaage (17) bildendes Überlaufbecken (26) angeordnet ist.

11. Strebausrüstung nach Anspruch 10, **dadurch gekennzeichnet, dass** die Basisstation (19) in der jeweils tiefer liegenden Abbaubegleitstrecke (14) angeordnet ist.

12. Strebausrüstung nach Anspruch 10 oder 11, **dadurch gekennzeichnet, dass** der dem Überlaufbecken (26) nächstgelegene Drucksensor (21) der Schlauchwaage (17) in einer definierten Höhe unter dem Überlaufbecken (26) angeordnet ist.

13. Strebausrüstung nach einem der Ansprüche 1 bis 12, **dadurch gekennzeichnet, dass** an der Basisstation (19) ein Anschluss zur Befüllung der Schlauchwaage (17) mit Flüssigkeit angeordnet ist.

14. Strebausrüstung nach einem der Ansprüche 1 bis 10, **dadurch gekennzeichnet, dass** parallel zu der Schlauchleitung (18, 23, 24) der Schlauchwaage (17) eine Luftleitung verlegt ist, an die die in der Schlauchleitung der Schlauchwaage angeordneten Drucksensoren (22) angeschlossen sind.

## Claims

1. A longwall equipment for mechanical extraction in longwall mining, in particular in underground coal mining, having a face conveyor (12) arranged along the coal face (10), having an extraction machine which can be displaced along the face conveyor (12) and having shield support units (15) attached to the face conveyor (12) at an angle thereto, **characterised in that**, in order to determine the absolute height position of determined elements of the longwall equipment, a liquid-filled hydrostatic tube balance (17) is installed along the coalface (10) on the selected elements (12, 15, 31) of the longwall equipment and is connected to a base station (19) arranged in one of the gate roads (13, 14) and determined precisely in its height as a reference point, wherein pressure sensors (22) are incorporated into the tube conduit (18, 23, 24) of the hydrostatic tube balance (17), distributed over the course of the longwall equipment on individual elements (12, 15, 31) of the longwall equipment, and are connected to a central evaluation and control unit.

2. Longwall equipment according to claim 1, **characterised in that** the tube conduit (24) of the hydrostatic tube balance (17) is installed on the top canopies (32) of the shield support units (15) and a pressure sensor (22) is assigned in each case to individual shield support'units (15).

3. Longwall equipment according to claim 1, **characterised in that** the tube conduit (23) of the hydrostatic tube balance (17) is installed on the skids (35) of the shield support units (15) and a pressure sensor (22) is assigned in each case to individual shield support units (15).

4. Longwall equipment according to claim 1, **characterised in that** the tube conduit (18) of the hydrostatic tube balance (17) is installed on the chutes of the face conveyor (12) and a pressure sensor (22) is assigned in each case to individual chute lengths spaced apart from one another.

5. Longwall equipment according to claim 1, **characterised in that** the extraction machine (31) displaceable along the coalface (10) is connected to a tube conduit of the hydrostatic tube balance connected to the base station (19) and at least one pressure sensor (38) is arranged on the extraction machine (31).

6. Longwall equipment according to any one of claims 1 to 5, **characterised in that** a plurality of individual hydrostatic tube balances (17) with associated tube conduits (18, 23, 24) and pressure sensors (22) arranged therein are disposed on the elements (12, 15, 31) of the longwall equipment.

7. Longwall equipment according to any one of claims 1 to 5, **characterised in that** a supply line (25) is led from the base station (19) to the face-to-roadway transition (40), from which supply line at least two tube conduits (18, 23, 24) installed on different components (12, 15, 31) of the longwall equipment proceed, which are connected to one another in the region of the opposite gate road, and that the pressure sensors (22) incorporated in the different tube conduits (18, 23, 24) in each case have the same distance from the face-to-roadway transition (40).

8. Longwall equipment according to any one of claims 1 to 7, **characterised in that** a tube conduit section (20) of the hydrostatic tube balance (17) is installed in the gate road (13) lying opposite the gate road (14) accommodating the base station (19).

9. Longwall equipment according to claim 8, **characterised in that** a pressure control valve (29) is arranged at the end of the tube conduit section (20) for the formation of a pressurised hydrostatic tube balance closed at both ends.

10. Longwall equipment according to claim 8, **characterised in that** an overflow basin (26) forming the highest point of the hydrostatic tube balance (17) is arranged at the end of the tube conduit section (20) in order to form a hydrostatic tube balance open at one end.

11. Longwall equipment according to claim 10, **characterised in that** the base station (19) is arranged in the, at the time, lower-lying gate road.

12. Longwall equipment according to claim 10 or 11, **characterised in that** the pressure sensor (21) of the hydrostatic tube balance (17) lying closest to the overflow basin (26) is disposed at a defined height below the overflow basin (26).

13. Longwall equipment according to any one of claims 1 to 12, **characterised in that** a connection for the filling of the hydrostatic tube balance (17) with liquid is disposed at the base station (19).

14. The longwall equipment according to any one of claims 1 to 10, **characterised in that** an air line is installed parallel to the tube conduit (18, 23, 24) of the hydrostatic tube balance (17), to which air line the pressure sensors (22) disposed in the tube conduit of the hydrostatic tube balance are connected.

## Revendications

1. Equipement de taille pour l'extraction mécanique par tailles chassantes à front continu, en particulier dans le domaine de l'exploitation de mines de charbon souterraines, comprenant une bande transporteuse de taille (12) disposée le long du front de taille (10), un moyen d'extraction pouvant être déplacé le long de la bande transporteuse de taille (12) et des unités de soutènement à bouclier (15) suspendues au moyen d'extraction selon un angle par rapport à la bande transporteuse de taille (12), **caractérisé en ce qu'**un niveau à eau (17) rempli d'un liquide est posé le long du front de taille (10) au niveau d'éléments (12, 15, 31) sélectionnés de l'équipement de taille afin de déterminer la position absolue en hauteur desdits éléments prédéfinis de l'équipement de taille, ledit niveau à eau étant raccordé à une station de base (19) dont la position en hauteur est définie avec précision comme point de référence et qui est disposé dans une des galeries conjuguées d'exploitation (13, 14), sachant que des capteurs de pression (22) sont installés, de manière répartie sur l'équipement de taille, au niveau de divers éléments (12, 15, 31) de l'équipement de taille, dans le tuyau flexible (18, 23, 24) du niveau à eau (17) et sont reliés à une unité centrale d'analyse et de commande.

2. Equipement de taille selon la revendication 1, **caractérisé en ce que** le tuyau flexible (24) du niveau à eau (17) est posé au niveau des chapeaux de toit (32) des unités de soutènement à bouclier (15), et **en ce que** respectivement un capteur de pression (22) est associé à diverses unités de soutènement à bouclier (15).

3. Equipement de taille selon la revendication 1, **caractérisé en ce que** le tuyau flexible (23) du niveau à eau (17) est posé au niveau des semelles (35) des unités de soutènement à bouclier (15), et **en ce que** respectivement un capteur de pression (22) est associé à diverses unités de soutènement à bouclier (15).

4. Equipement de taille selon la revendication 1, **caractérisé en ce que** le tuyau flexible (18) du niveau à eau (17) est posé au niveau des gouttières de la bande transporteuse de taille (12), et **en ce que** respectivement un capteur de pression (22) est associé à divers bacs de gouttière espacés les uns des autres.

5. Equipement de taille selon la revendication 1, **caractérisé en ce que** la machine d'extraction (31) pouvant être déplacée le long du front de taille (10) est raccordée à un tuyau flexible, raccordé à la station de base (19), du niveau à eau, et **en ce qu'**au moins un capteur de pression (38) est disposé au niveau de la machine d'extraction (31).

6. Equipement de taille selon l'une quelconque des revendications 1 à 5, **caractérisé en ce que** plusieurs divers niveaux à eau (17) comprenant des tuyaux flexibles (18, 23, 24) associés et des capteurs de pression (22) disposés dans lesdits tuyaux flexibles sont disposés au niveau des éléments (12, 15, 31) de l'équipement de taille.

7. Equipement de taille selon l'une quelconque des revendications 1 à 5, **caractérisé en ce qu'**une conduite d'arrivée (25) est guidée depuis la station de base (19) jusqu'au passage de galerie de taille (40), de laquelle conduite d'arrivée partent au moins deux tuyaux flexibles (18, 23, 24), qui sont posés au niveau de différents composants (12, 15, 31) de l'équipement de taille et qui sont reliés entre eux dans la zone de la galerie conjuguée d'exploitation opposée, et **en ce que** les capteurs de pression (22) installés dans les différents tuyaux flexibles (18, 23, 24) présentent respectivement la même distance du passage de galerie de taille (40).

8. Equipement de taille selon l'une quelconque des revendications 1 à 7, **caractérisé en ce qu'**un tronçon (20) de tuyau flexible du niveau à eau (17) est posé dans la galerie conjuguée d'exploitation (13) opposée à la galerie conjuguée d'exploitation (14) logeant la station de base (19).

9. Equipement de taille selon la revendication 8, **caractérisé en ce qu'**une soupape de limitation de pression (29) est disposée au niveau de l'extrémité du tronçon (20) de tuyau flexible pour former un niveau à eau fermé des deux côtés, rempli sous pression.

10. Equipement de taille selon la revendication 8, **caractérisé en ce qu'**un bassin à débordement (26) formant le point le plus haut du niveau à eau (17) est disposé au niveau de l'extrémité du tronçon (20) de tuyau flexible pour former un niveau à eau ouvert d'un côté.

11. Equipement de taille selon la revendication 10, **caractérisé en ce que** la station de base (19) est disposée dans la galerie conjuguée d'exploitation (14) située respectivement au point le plus bas.

12. Equipement de taille selon la revendication 10 ou 11, **caractérisé en ce que** le capteur de pression (21), se trouvant immédiatement à proximité du bassin à débordement (26), du niveau à eau (17) est disposé à une hauteur définie sous le bassin à débordement (26).

13. Equipement de taille selon l'une quelconque des revendications 1 à 12, **caractérisé en ce qu'**un raccord servant à remplir de liquide le niveau à eau (17) est disposé au niveau de la station de base (19).

14. Equipement de taille selon l'une quelconque des revendications 1 à 10, **caractérisé en ce qu'**est posé, de manière parallèle au tuyau flexible (18, 23, 24) du niveau à eau (17), un tuyau d'air, auquel sont raccordés les capteurs de pression (22) disposés dans le tuyau flexible du niveau à eau.
